# FASCICULE DE BREVET EUROPEEN

(11) **EP 1 241 341 B1**
(45) Date de publication et mention de la délivrance du brevet: **31.05.2006**
(21) Numéro de dépôt: 02290644.0
(22) Date de dépôt: 14.03.2002
(51) Int. Cl.: F02K 9/42, B64G 1/40, F02K 9/94

(54) **Module de propulsion cryotechnique**
Cryotechnische Schubeinheit
Cryotechnic propulsion module

(30) Priorité: 16.03.2001 FR 0103589
(43) Date de publication de la demande: 18.09.2002
(73) Titulaire: SNECMA, 75015 Paris (FR)
(72) Inventeur: Valentian, Dominique, 78710 Rosny-sur-Seine (FR); Borromee, Jacques, 78000 Versailles (FR)
(74) Mandataire: Thévenet, Jean-Bruno

(56) Documents cités:
- WO-A-87/04992
- US-A- 3 136 121
- US-A- 4 385 489
- US-A- 5 207 399
- US-A- 5 251 852

## Description

### Domaine de l'invention

La présente invention concerne un module de propulsion cryotechnique à faible poussée applicable à un lanceur classique ou à un lanceur récupérable.

L'invention concerne plus particulièrement un module de propulsion cryotechnique à faible poussée permettant d'assurer le transfert d'orbite d'un satellite, le module de propulsion pouvant être intégré au satellite ou pouvant constituer un étage de propulsion séparé.

### Art antérieur

Une préoccupation majeure dans le domaine du lancement de satellites réside dans l'amélioration de la masse injectée en orbite géostationnaire pour une masse de lanceur déterminée.

La méthode la plus classique consiste à injecter un satellite en orbite de transfert dite GTO (Geostationary Transfer Orbit) puis à transférer ce satellite en orbite géostationnaire à l'aide d'un moteur d'apogée biliquide, le module de propulsion biliquide étant intégré au satellite.

On a par ailleurs proposé de transférer un satellite d'une orbite basse à une orbite géostationnaire à l'aide d'un étage héliothermique utilisant l'hydrogène liquide.

Un tel procédé est décrit par exemple dans l'article de J.A. Bonometti et C. W. Hawk intitulé "Solar thermal rocket research apparatus and proposed testing" (University of Alabama - 1994).

Ce procédé est également évoqué dans l'article de J. M. Shoji paru dans Progress in Astronautics and Aeronautics-AIAA- Volume 87 et intitulé "Potential of advanced solar thermal propulsion (pages 30 à 47) Orbit raising and maneuvering propulsion: research status and needs".

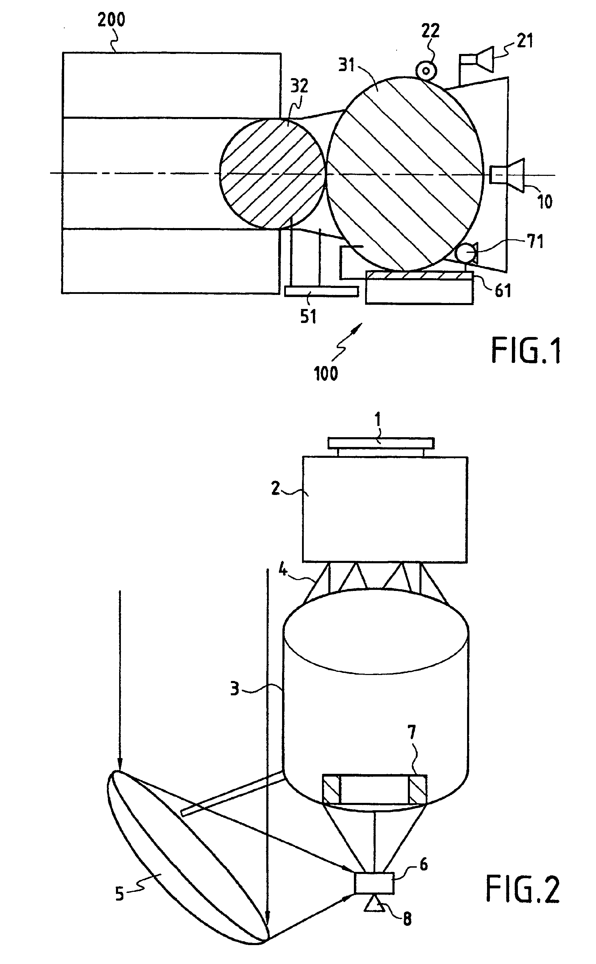

Selon ce procédé connu, qui est illustré sur la Figure 2, la lumière du soleil est concentrée par un miroir parabolique 5 sur un four solaire 6 dans lequel l'hydrogène est réchauffé à une température de l'ordre de 2000 K. L'hydrogène est ensuite détendu dans une tuyère d'un propulseur 8 en fournissant une vitesse d'éjection élevée (7500 à 8000 m/s), soit une impulsion spécifique voisine de 750 à 800 s. On voit sur la Figure 2 le schéma d'un tel agencement avec un satellite 2 relié d'une part à un lanceur par une interface 1 et d'autre part à un réservoir d'hydrogène 3 par un treillis structural 4. La référence 7 montre de façon schématique un dispositif d'acquisition de l'hydrogène liquide pour alimenter le four solaire 6 et le propulseur 8.

Un tel dispositif, qui n'a jamais été appliqué en pratique, devrait théoriquement permettre d'augmenter la masse injectée en orbite géostationnaire. Cette configuration présente cependant plusieurs inconvénients.

En particulier, afin d'atteindre une température de 2000 K, il est nécessaire de recourir à un facteur de concentration du flux solaire de 5000 à 8000, ce qui suppose un miroir de très bonne qualité, très difficile à obtenir lorsque l'on est soumis à des contraintes impliquant de limiter la masse embarquée. De plus, le pointage vers le soleil doit être très précis, de l'ordre de ± 5 minutes d'arc selon deux axes, ce qui pose des problèmes de contrôle d'attitude.

L'encombrement du réservoir 3 d'hydrogène liquide constitue également une difficulté. En effet, à titre d'exemple, pour obtenir une impulsion totale fournie de 30 MN.s (MegaNewton.seconde), on doit utiliser un réservoir contenant 4000 kg d'hydrogène liquide qui présente alors un volume de 60 m³ (ce qui implique par exemple un diamètre de 4,2 m et une hauteur de 5 m).

Les développements des systèmes de transfert d'orbite basés sur un étage héliothermique utilisant de l'hydrogène liquide sont donc hypothéqués par ces inconvénients.

Selon une autre technique permettant d'augmenter la masse placée en orbite géostationnaire ou GTO, on a recours à un étage supérieur de lanceur du type cryotechnique, qui permet d'utiliser des réservoirs de volume relativement réduit permettant une intégration plus aisée dans le lanceur. Ainsi, pour obtenir une impulsion totale de 30 MN.s, un étage cryotechnique à hydrogène liquide et oxygène liquide nécessite une masse d'ergol de 6600 kg mais le volume des réservoirs n'est que de 22 m³.

Les étages cryotechniques mis en oeuvre actuellement nécessitent cependant l'utilisation de turbopompes, ce qui accroît le coût.

Certains auteurs ont proposé de réaliser des étages cryotechniques alimentés par pression, sans utilisation de turbopompes, mais ces concepts n'ont pas donné lieu à des réalisations concrètes. En effet, en pratique, la pression d'hydrogène doit toujours être supérieure à la pression d'oxygène afin d'assurer le refroidissement régénératif de la chambre de combustion. Il s'ensuit que la masse d'hélium nécessaire à la mise en pression est alors prohibitive.

On connaît par la demande internationale WO 87/04992. un système de propulsion à ergols hypergoliques liquides à température ambiante, comprenant un moteur d'apogée, des propulseurs secondaires de contrôle d'attitude, des premier et deuxième réservoirs d'alimentation en ergols stockables et des moyens de mise en pression intermittente de ces réservoirs d'alimentation. La mise en oeuvre de moyens de commande comprenant des vannes SQUIB qui ne peuvent changer d'état qu'une seule fois empêche la réalisation de tirs successifs du propulseur d'apogée.

### Objet et description succincte de l'invention

L'invention vise à remédier aux inconvénients précités et notamment à permettre d'assurer le transfert d'orbite d'un satellite avec un dispositif plus simple, moins lourd et moins encombrant que les dispositifs de l'art antérieur en évitant l'utilisation de turbopompes et en permettant l'utilisation à la fois de propulseurs et de réservoirs d'ergol de taille raisonnable qui limitent l'encombrement de l'étage de propulsion considéré nécessaire au transfert d'orbite du satellite.

Ces buts sont atteints grâce à un module de propulsion cryotechnique à faible poussée, présentant une poussée comprise entre 100 et 1000 N, caractérisé en ce qu'il comprend au moins un propulseur cryotechnique principal dont la pression de combustion est comprise entre 2 et 10 bars, au moins deux propulseurs secondaires de contrôle d'attitude, au moins des premier et deuxième réservoirs d'alimentation en ergols cryogéniques, des moyens de mise en pression intermittente desdits réservoirs d'alimentation et des moyens pour déclencher des tirs du propulseur cryotechnique principal de façon intermittente, pendant la mise en pression intermittente desdits réservoirs d'alimentation, la durée entre deux tirs successifs étant comprise entre environ 1 heure 30 minutes et 12 heures, en ce que les moyens de mise en pression intermittente d'un réservoir d'alimentation comprennent au moins un circuit échangeur de chaleur associé à un accumulateur thermique et des moyens de mise en circulation d'une quantité prédéterminée d'un ergol dans ledit circuit échangeur de chaleur et en ce qu'il comprend en outre des moyens pour réchauffer l'accumulateur thermique dans les périodes comprises entre deux tirs consécutifs.

L'accumulateur thermique associé à un réservoir d'ergol peut être chauffé au moins en partie à l'aide d'un capteur solaire, par exemple à l'aide d'un capteur solaire plan dont le rapport absortivité/émissivité (α/ε) est supérieur à 1 et qui est muni d'une super isolation sur sa face arrière.

L'accumulateur thermique peut toutefois également être chauffé au moins en partie par récupération des pertes thermiques d'une pile à combustible fonctionnant à l'aide des ergols évaporés.

La pile à combustible peut être alimentée par les vapeurs froides d'ergol issues d'un échangeur de chaleur destiné à maintenir constante la température de puisage d'un réservoir d'ergol.

L'accumulateur thermique peut aussi être chauffé au moins en partie par chauffage électrique.

L'accumulation thermique au sein de l'accumulateur thermique est avantageusement effectuée par un matériau à changement de phase tel qu'un métal alcalin sur un hydrocarbure.

Selon un mode particulier de réalisation, le module de propulsion cryotechnique comprend des premier et deuxième réservoirs d'ergol pour alimenter le propulseur principal et les ergols sont intégralement vaporisés dans les accumulateurs thermiques associés aux réservoirs de manière à garantir un rapport de mélange constant.

Selon un mode de réalisation avantageux, le module de propulsion cryotechnique comprend au moins des premier et deuxième réservoirs principaux d'ergols et au moins des premier et deuxième réservoirs secondaires d'ergols constituant des réservoirs tampons, lesquels réservoirs secondaires peuvent être mis en pression par lesdits moyens de mise en pression et sont dimensionnés de manière à permettre d'assurer une manoeuvre orbitale lorsqu'ils alimentent de façon intermittente le propulseur principal et à être totalement vides à la fin d'un tir, des moyens étant prévus pour réalimenter lesdits réservoirs secondaires à partir des réservoirs principaux correspondants, entre deux tirs successifs, et la pression des réservoirs principaux étant maintenue inférieure à la pression d'alimentation du propulseur principal.

Dans ce cas, selon un mode de réalisation particulier, un réservoir secondaire est recouvert d'une isolation thermique et est monté à l'intérieur d'un réservoir principal.

### Brève description des dessins

D'autres caractéristiques et avantages de l'invention ressortiront de la description suivante de modes particuliers de réalisation de l'invention, donnés à titre d'exemples, en référence aux dessins annexés, sur lesquels :
- la Figure 1 est une vue générale schématique d'un exemple de module de propulsion cryotechnique selon l'invention et d'un satellite auquel le module est associé,
- la Figure 2 représente schématiquement un étage héliothermique selon l'art antérieur et le satellite auquel est associé cet étage héliothermique,
- la Figure 3 est un schéma d'ensemble des organes fonctionnels principaux d'un exemple de module de propulsion cryotechnique à chauffage solaire, selon un mode de réalisation de l'invention,
- les Figures 4 et 5 sont respectivement des vues en coupe et de face d'un exemple de capteur solaire plan à accumulateur thermique intégré et échangeur de chaleur, utilisable dans le cadre de la présente invention,
- la Figure 6 est une vue schématique en coupe montrant l'association d'un capteur solaire plan et d'un accumulateur thermique séparé,
- la Figure 7 montre en vue cavalière un exemple de capteur solaire passif associé à des miroirs réflecteurs plans, utilisable dans le cadre de la présente invention,
- la Figure 8 montre en vue cavalière un exemple de capteur solaire passif associé à des miroirs réflecteurs paraboliques,
- la Figure 9 montre le schéma d'ensemble des organes fonctionnels principaux d'un exemple de module de propulsion cryotechnique selon l'invention mettant en oeuvre des réservoirs tampons auxiliaires,
- la Figure 10 montre le schéma d'ensemble des organes fonctionnels principaux d'un autre exemple de module de propulsion selon l'invention mettant en oeuvre des réservoirs tampons auxiliaires et assurant une pré-vaporisation des ergols,
- la Figure 11 représente le schéma d'ensemble des organes fonctionnels principaux d'un autre exemple de module de propulsion selon l'invention utilisant une pile à combustible,
- la Figure 12 montre l'implantation d'un échangeur de chaleur dans le fond d'un réservoir principal d'ergol utilisable dans le module de propulsion cryotechnique selon l'invention,
- la Figure 13 montre le détail d'un exemple de réalisation de l'échangeur de chaleur représenté sur la Figure 12, et
- la Figure 14 est une vue partielle d'un réservoir principal d'ergol utilisable dans le module de propulsion cryotechnique selon l'invention et incorporant un réservoir tampon à l'intérieur du réservoir principal.

### Description détaillée de modes particuliers de réalisation de l'invention

On voit sur la Figure 1 le schéma d'ensemble d'un exemple de module de propulsion cryotechnique 100 selon l'invention comprenant un propulseur principal 10 du type à oxygène-hydrogène dont la pression de combustion, de l'ordre de 2 à 10 bars, est suffisamment faible pour produire des flux thermiques à la paroi cinq à dix fois plus faibles que dans le cas d'un propulseur cryotechnique classique, ce qui permet d'utiliser pour ce propulseur principal 10 un refroidissement régénératif simplifié ou même un refroidissement par rayonnement et par film.

Le propulseur principal 10 peut être unique et monté sur un cardan ou peut comprendre un ensemble d'au moins trois propulseurs cryotechniques principaux dont la poussée individuelle est contrôlée par une perte de charge variable sur les circuits d'alimentation en ergols.

Le propulseur principal 10, ou l'ensemble des propulseurs principaux, sont à faible poussée, de l'ordre de 100 à 1000 N, ce qui permet de diminuer leur encombrement et donc de réduire l'encombrement de l'ensemble de l'étage propulsif. L'utilisation de plusieurs propulseurs principaux à faible poussée permet par exemple de réduire la longueur de l'ensemble de l'étage de plus de 3 mètres par rapport à des configurations classiques.

Le module de propulsion 100 peut comprendre entre deux et six propulseurs de contrôle d'attitude, tels que par exemple un propulseur 21 de contrôle en lacet et un propulseur 22 de contrôle en roulis.

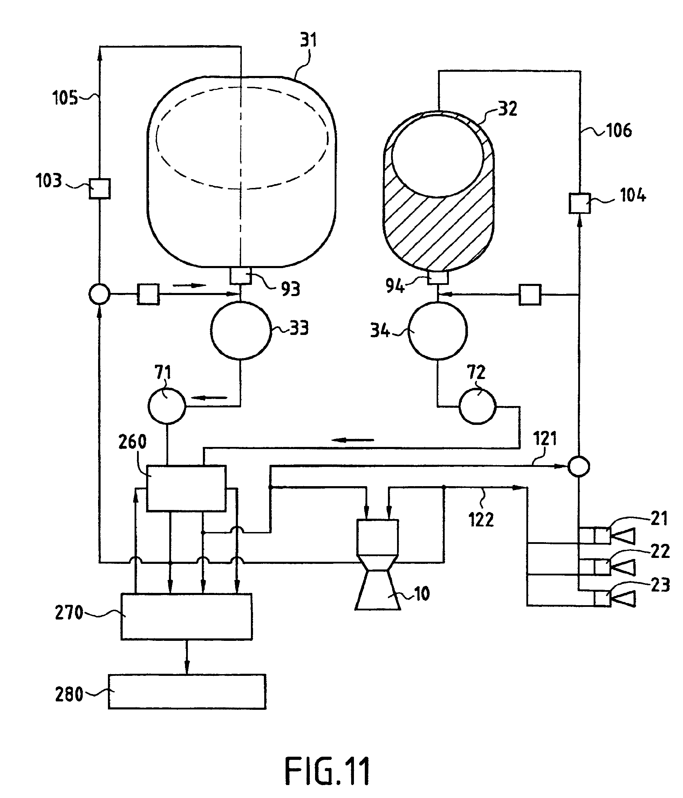

L'alimentation électrique du module de propulsion 100 peut être effectuée à partir d'un panneau solaire photovoltaïque 51 attaché au module, mais pourrait aussi être effectuée à l'aide d'une prise ombilicale reliée au satellite 200 à mettre en orbite avec le module de propulsion 100. L'alimentation électrique peut encore être réalisée à l'aide d'une pile de combustible, telle que la pile à combustible 270 de la figure 11, qui peut être alimentée par l'évaporation des ergols cryogéniques.

L'alimentation en ergols du propulseur principal 10 est effectuée de façon intermittente par mise en pression des réservoirs principaux 31, 32 de stockage respectivement d'hydrogène liquide et d'oxygène liquide. La pression de fonctionnement étant faible, l'indice de structure des réservoirs 31, 32 reste raisonnable.

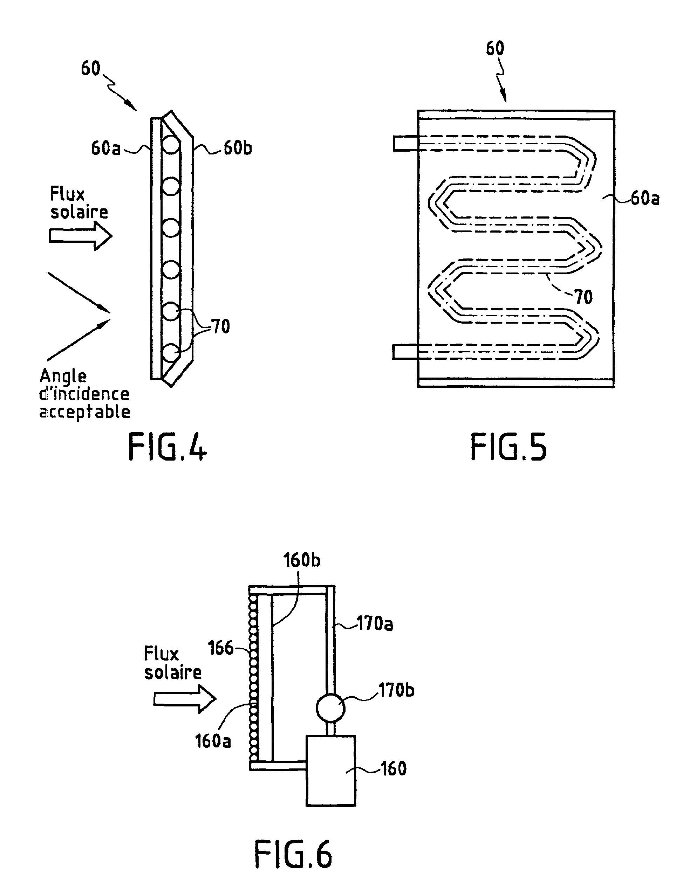

Les réservoirs 31, 32 d'alimentation en ergols cryogéniques tels que H₂, O₂ sont mis en pression sans turbopompes, par simple évaporation d'une quantité prédéterminée de chaque ergol dans un accumulateur thermique tel que par exemple l'accumulateur 60 des Figures 4 et 5 ou l'accumulateur 160 de la Figure 6. L'accumulateur thermique 60 est associé à un circuit échangeur de chaleur 70 et à une micro-pompe électrique de mise en circulation d'une quantité déterminée d'ergol dans le circuit échangeur de chaleur 70.

Sur la Figure 1 on a représenté à titre d'exemple une première micro-pompe 71 associée au premier réservoir 31 et à un accumulateur thermique 61.

L'accumulateur thermique 60, 160 est réchauffé dans les périodes comprises entre deux tirs consécutifs du propulseur principal 10.

L'accumulateur thermique peut être réchauffé soit par chauffage solaire, soit par chauffage électrique, soit par récupération des pertes thermiques d'une pile à combustible fonctionnant à l'aide des ergols évaporés, soit par une combinaison des trois méthodes.

L'accumulateur thermique est réchauffé entre deux tirs consécutifs du ou des propulseurs 10, cette durée de temps d'attente entre deux tirs étant comprise entre 1 heure 30 minutes et 12 heures suivant l'excentricité de l'orbite. Les tirs successifs du propulseur principal 10 peuvent être par exemple en nombre compris entre 10 et 30 et sont effectués au périgée ou à l'apogée de l'orbite, de sorte que la manoeuvre orbitale est ainsi réalisée par incréments compte tenu de la poussée volontairement faible du module de propulsion cryotechnique 100. Les intervalles de temps entre deux tirs successifs ne constituent cependant pas des temps morts et sont mis à profit pour réchauffer l'accumulateur thermique.

Les Figures 4 et 5 montrent un exemple d'accumulateur thermique 60 avec un capteur solaire plan 60a chauffant directement l'accumulateur thermique 60 en contact avec des tubes de circulation d'hydrogène d'un circuit 70 d'échange de chaleur. Une couche de super-isolation 60b est disposée à l'arrière de l'accumulateur thermique 60 et de l'échangeur de chaleur 70.

L'accumulateur thermique 60 proprement dit est avantageusement constitué d'un matériau à changement de phase, tel qu'un métal alcalin ou un hydrocarbure, ce qui permet de réduire la masse.

Le capteur solaire plan 60a peut être muni d'un revêtement à émissivité contrôlée (rapport absortivité/émissivité α/ε >> 1) de sorte que ce capteur peut atteindre une température d'équilibre supérieure à 100°C au soleil. Le capteur des Figures 4 et 5 peut accepter des angles d'incidence de flux solaire variant de plusieurs degrés.

A titre de variante, la Figure 6 montre un exemple de capteur solaire plan 160a associé à une couche de super-isolation 160b située sur la face arrière et servant à réchauffer un accumulateur thermique 160 séparé par l'intermédiaire d'un faisceau de tubes 166 plaqué sur la face avant du capteur 160a et d'un réseau 170a de circulation de fluide associé à un microventilateur 170b.

A la différence de la propulsion héliothermique, l'utilisation de capteurs solaires plans 60a permet d'éliminer les exigences de pointage précis, une erreur de l'ordre de ± 20° sur deux axes étant parfaitement acceptable.

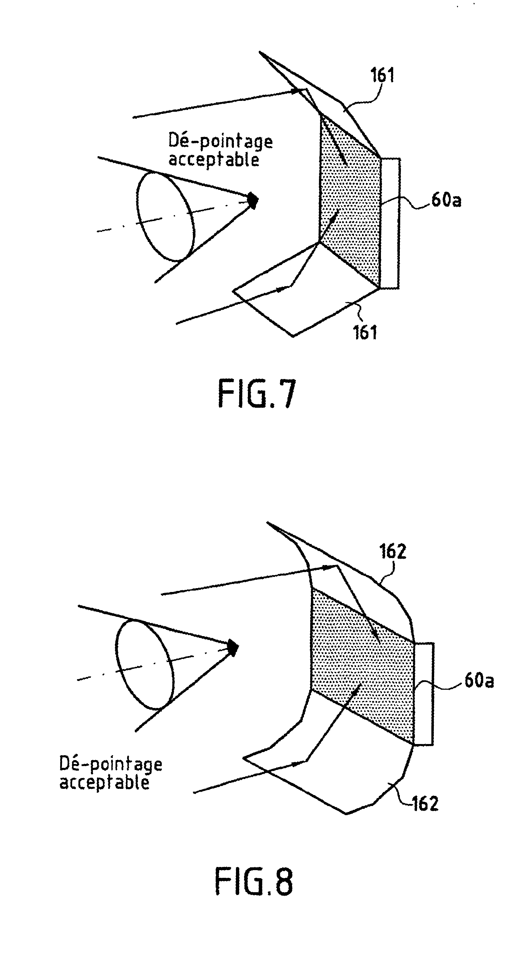

La surface, et donc la masse du capteur solaire 60a, peut être déterminée en utilisant des miroirs de concentration plans 161 (Figure 7) ou paraboliques-cylindriques 162 (Figure 8) sans que cela augmente les exigences de pointage sur le soleil.

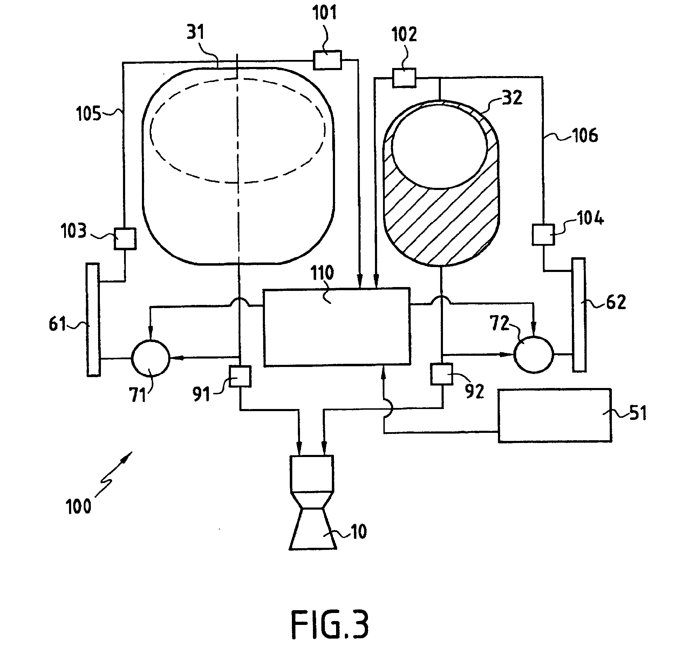

La Figure 3 montre le schéma de principe de la mise en pression des réservoirs 31, 32 par accumulation thermique avec des accumulateurs thermiques 61, 62, munis de capteurs solaires, associés respectivement aux réservoirs principaux 31, 32 d'hydrogène liquide et d'oxygène liquide.

Sur l'exemple de la Figure 3, un circuit électronique de commande 110, alimenté par un panneau solaire 51, assure l'alimentation de micro-pompes électriques 71, 72 associées aux réservoirs 31, 32. Le panneau solaire 51 peut être monté sur le module de propulsion ou sur le satellite à mettre en orbite, la connexion électrique entre le panneau solaire 51 et le circuit électrique de commande pouvant être assurée par un connecteur largable. Le module de propulsion 100 peut toutefois être lui-même intégré au satellite 200.

Les micro-pompes électriques 71, 72 injectent à la demande les ergols liquides dans les accumulateurs thermiques 61, 62, ce qui amène les ergols au voisinage de la température ambiante et assure par les lignes 105, 106 la mise en pression des réservoirs correspondants 31, 32.

Lorsque les pressions de consigne sont atteintes, les micro-pompes 71, 72 sont arrêtées. Le contrôle des micro-pompes 71, 72 est assuré par les circuits électroniques de commande 110 reliés à des capteurs de pression 101, 102 mesurant la pression des réservoirs 31, 32.

Après mise en pression des réservoirs 31, 32, il suffit d'ouvrir les électrovannes 91, 92 d'alimentation du moteur principal 10 en ergols, puis d'allumer le moteur 10 par décharge électrique afin d'assurer la manoeuvre orbitale.

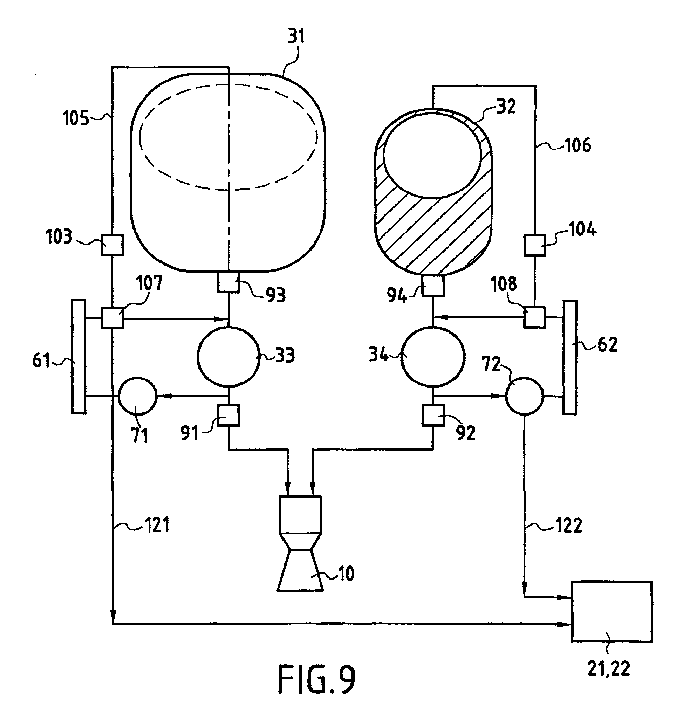

La configuration représentée sur la Figure 3 peut être améliorée en utilisant des réservoirs tampons auxiliaires 33, 34 en association avec des réservoirs principaux d'ergols 31, 32, comme représenté sur les Figures 9 à 11, sur lesquelles on n'a toutefois pas représenté le circuit électronique de commande 110, les capteurs de pression 101, 102 et l'alimentation électrique 51 afin de clarifier les dessins, bien que ces éléments fassent également partie des modes de réalisation des Figures 9 à 11.

Dans la mesure où la masse d'ergols utilisée au cours d'une manoeuvre est de l'ordre de 100 kg, on peut utiliser pour les manoeuvres des réservoirs tampons 33, 34 de petite taille plus faciles à mettre en pression que les réservoirs principaux 31, 32. Ceci permet par ailleurs de diminuer l'indice de structure des réservoirs principaux 31, 32, ces derniers étant soumis à une pression modérée de l'ordre de 1 bar absolu.

Si l'on considère la Figure 9, on voit que les réservoirs auxiliaires 33, 34 initialement à basse pression, après un tir, peuvent être remplis en ergol à partir des réservoirs principaux 31, 32 en ouvrant les vannes 93, 94 de communication entre les réservoirs principaux 31, 32 et les réservoirs auxiliaires 33, 34.

Les réservoirs auxiliaires 33, 34 sont ensuite mis en pression par activation des micro-pompes 71, 72 injectant l'ergol liquide dans les accumulateurs thermiques 61, 62, les vannes 103, 104 situées sur les canalisations 105, 106 de mise en pression des réservoirs principaux 31, 32 restant fermées.

La pression dans les réservoirs auxiliaires 33, 34 peut ainsi passer de 1 bar à par exemple 5 bars. Lorsque la pression de consigne est atteinte, les vannes 91, 92 d'alimentation du propulseur principal 10 sont ouvertes et la manoeuvre peut avoir lieu.

Pendant le tir du propulseur 10, la pression des réservoirs tampons 33, 34 est maintenue à peu près constante par activation à la demande des micro-pompes.

Le flux de gaz circulant dans les accumulateurs thermiques 61, 62 permet également le fonctionnement des propulseurs de contrôle d'attitude 21, 22 par l'intermédiaire des lignes 121, 122 alimentées en ergols gazeux à travers les vannes 107, 108 interposées entre les accumulateurs thermiques 61, 62 et les réservoirs tampons 33, 34.

On notera que dans le cas des modes de réalisation des Figures 3 et 9, le propulseur principal 10 est alimenté en ergols liquides.

On peut souhaiter alimenter ce propulseur 10 en ergols vaporisés afin d'éviter des difficultés de mise en froid ou de grandes variations du rapport de mélange qui pourraient apparaître compte tenu de la petite taille du propulseur principal 10.

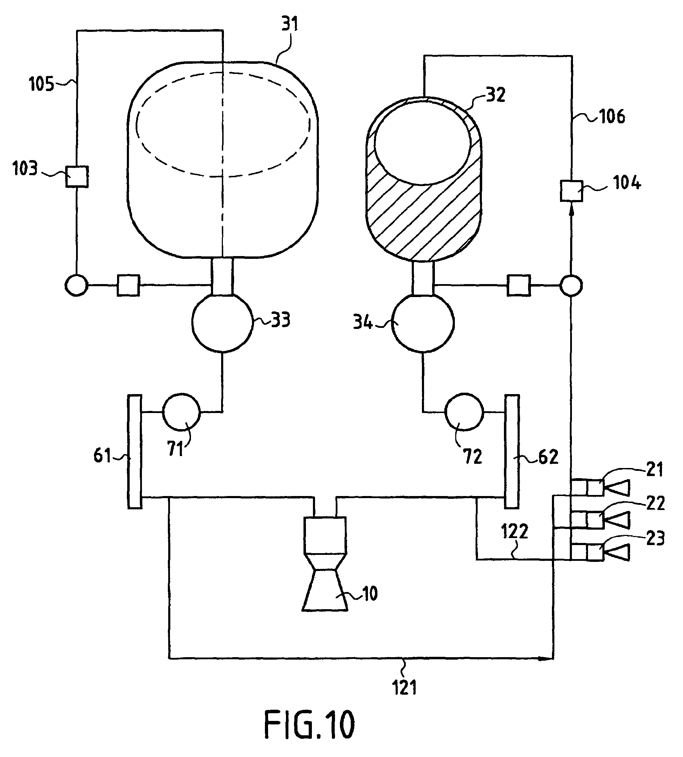

La Figure 10 montre un exemple de réalisation selon l'invention dans lequel non seulement les propulseurs auxiliaires 21, 22, 23 sont alimentés en gaz, mais le propulseur principal 10 est lui-même alimenté en ergols gazeux vaporisés dans les accumulateurs thermiques 61, 62.

Dans le cas de la Figure 10, où les éléments semblables à ceux de la Figure 9 portent les mêmes numéros de référence, l'ensemble des ergols envoyés par les micro-pompes 71, 72 dans les accumulateurs thermiques 61, 62 est vaporisé. La capacité thermique des accumulateurs doit être adaptée en conséquence. Les ergols vaporisés ne sont pas renvoyés vers les réservoirs tampons 33, 34 après passage dans les accumulateurs thermiques 61, 62, mais sont au contraire injectés directement dans le propulseur principal 10 et dans les propulseurs secondaires 21 à 23.

A titre d'exemple, pour vaporiser, puis chauffer, 20 kg d'hydrogène liquide, il faut une énergie de 37 MJ, ce qui suppose une puissance moyenne de 2500 W en 3 heures. Un capteur solaire de 2,2 m² est largement suffisant pour fournir une telle puissance.

On notera que, pour que les réservoirs tampons puissent être remplis en microgravité, il faut être sûr que l'ergol liquide soit toujours présent du côté du puisage du réservoir principal.

Pour résoudre ce problème, on fait circuler lentement l'ergol liquide sur les parois du réservoir et on refroidit localement le puisage à l'aide d'un échangeur de chaleur.

Un exemple d'un tel dispositif dénommé ATVS (Active Thermodynamic Vent System) est décrit dans la publication de E.C. Cady et A.D. Olsen intitulée "Thermal Upper Stage Technology Demonstration Program" AIAA 96 - 3011 - 32nd AIAA Joint Propulsion Conference, Lake Buena Vista, juillet 1996.

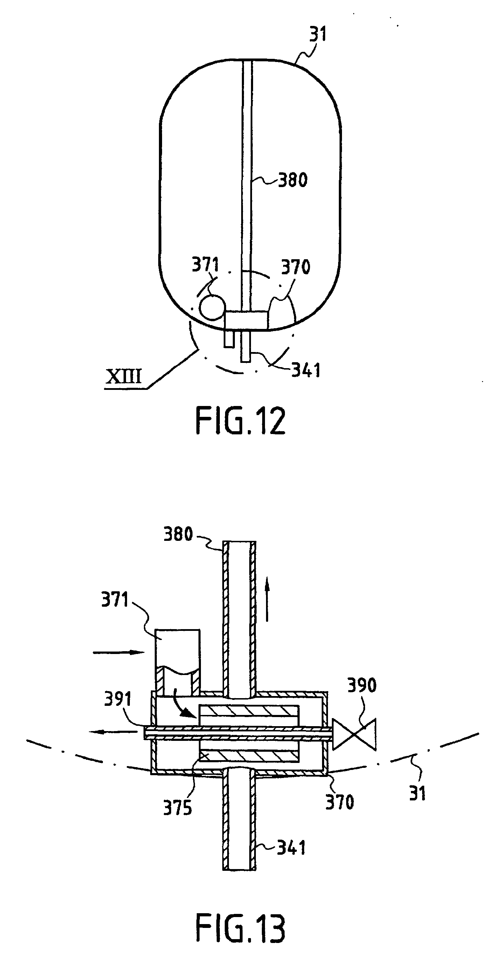

Les Figures 12 et 13 montrent un exemple de mise en oeuvre d'un tel dispositif dans un réservoir principal 31 d'un module de propulsion selon l'invention.

Le fond du réservoir 31 est occupé par un volume de puisage refroidi par un échangeur de chaleur 370 pouvant comprendre un tube d'échangeur 375 à ailettes. Une petite pompe électrique 371 permet de faire circuler le fluide refroidi dans le réservoir par l'intermédiaire d'un tube central 380. Une vanne de détente 390 permet de vaporiser le fluide et les vapeurs froides sont ensuite évacuées en dehors du réservoir par un tube 391. Le puisage des vapeurs froides peut n'avoir lieu que pendant le tir du propulseur principal, qui a été alimenté par la canalisation inférieure 341.

La Figure 11 montre un exemple de réalisation mettant en oeuvre une pile à combustible 270 pouvant être alimentée en permanence en ergols à partir des réservoirs principaux 31, 32 et auxiliaires 33, 34. En particulier, la pile à combustible 270 peut être alimentée par les vapeurs froides d'ergol issues de l'échangeur de chaleur destiné à maintenir constante la température de puisage de chaque réservoir principal.

La pile à combustible 270 peut fournir, par l'intermédiaire d'une barre de puissance 280, la puissance nécessaire aux différentes servitudes (pompes, vannes, réchauffeurs électriques) ainsi qu'à la case à équipements du module de propulsion (centrale inertielle, calculateur de bord, liaisons radio).

Le rendement de la pile 270 étant de l'ordre de 50%, les pertes sont utilisées pour réchauffer tout ou partie des ergols alimentant le propulseur principal 10, dans un module 260 constituant un échangeur de chaleur et un accumulateur thermique. La puissance dissipée par la pile 270 est ainsi stockée dans l'accumulateur 260 afin de réchauffer les ergols liquides, ce qui permet de mettre en pression les réservoirs auxiliaires 33, 34 et d'alimenter aussi bien le propulseur principal 10 que les propulseurs de contrôle d'attitude 21 à 23.

Si la pile développe une puissance moyenne de 1 kW, l'énergie accumulée en trois heures atteindra sensiblement 11 MJ.

Dans le cas d'un mode de réalisation tel que celui de la Figure 11 utilisant une pile à combustible 270 plutôt qu'un capteur solaire 60a comme source de chauffage, le contrôle d'attitude par les propulseurs secondaires 21 à 23 peut être découplé du pointage vers le soleil, ce qui offre une liberté supplémentaire dans le positionnement.

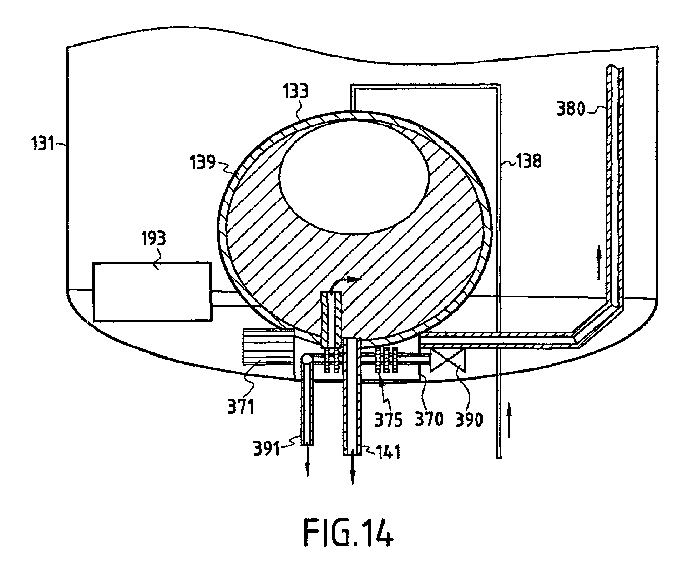

La Figure 14 représente une variante de réalisation dans laquelle un réservoir tampon 133 est disposé à l'intérieur d'un réservoir principal 131. Ceci permet de réaliser un ensemble plus compact et de diminuer les pertes thermiques.

Le réservoir tampon 133 est muni d'une couche extérieure 139 d'isolation thermique et est associé à une vanne de remplissage 193 et à une ligne 138 de mise en pression du réservoir.

Le réservoir tampon 133 est monté au-dessus d'un échangeur de chaleur 370 qui peut être similaire à l'échangeur de chaleur de la Figure 13. La présence d'un réservoir tampon 133 incorporé dans un réservoir principal 131 favorise la rétention du liquide à proximité de l'échangeur de chaleur 370, en particulier en fin de fonctionnement. Le tube de circulation 380 est déporté sur le côté du réservoir principal 131.

Dans un module de propulsion selon l'invention, le contrôle du vecteur poussée peut s'effectuer de trois manières différentes, la fonction anti-roulis étant elle-même assurée par au moins deux propulseurs auxiliaires 21, 22.

Selon un premier cas, le propulseur principal 10 est associé à deux paires de propulseurs auxiliaires de contrôle en tangage et lacet, d'axe parallèle au propulseur principal 10 qui est fixe.

Selon un deuxième cas, le propulseur principal 10 est monté sur une articulation de cardan. Deux vérins électromécaniques assurent une orientation vis-à-vis du module de propulsion.

Selon un troisième cas, la fonction du propulseur principal est assurée par trois ou quatre propulseurs dont la poussée peut être réglée par une vanne proportionnelle laminant plus ou moins le débit d'ergol, ce qui permet de contrôler la position du vecteur poussée vis-à-vis du centre de gravité.

Dans le cas où le module de propulsion cryotechnique 100 selon l'invention utilise des capteurs solaires, on peut noter que les exigences de pointage sont très faciles à satisfaire (de l'ordre de 20° de tolérance selon deux axes) tandis que la mise en oeuvre de solutions du type héliothermique implique un pointage de deux axes à 5' d'arc près.

Par ailleurs, le propulseur cryotechnique à faible poussée présente un volume plus faible du fait de la densité moyenne des ergols de 0,3 au lieu de 0,07 par rapport aux solutions héliothermiques, ce qui rend plus facile l'intégration sous une coiffe. De plus, la masse sèche du module selon l'invention est réduite car le stockage thermique est moins lourd, le pourcentage de masse des réservoirs est inférieur à 10% (contre environ le double dans le cas d'une solution héliothermique) et un concentrateur primaire de l'énergie solaire n'est plus nécessaire comme dans le cas des solutions héliothermiques. Enfin, la durée totale d'une mission est également raccourcie avec un module de propulsion selon l'invention.

Si l'on effectue une comparaison avec un étage supérieur cryotechnique conventionnel, un module de propulsion selon l'invention présente à technologie égale une masse sèche plus faible du fait qu'il n'est pas fait usage de sphères d'hélium ni de platines de détente de gaz et du fait que le propulseur principal est lui-même moins lourd et beaucoup moins encombré. De plus, le propulseur principal est moins coûteux et la plupart des autres composants, de petite taille, sont également d'un coût réduit.

Dans le cas d'un étage supérieur cryotechnique alimenté par la pression d'un réservoir de façon classique, on peut noter que la faible pression du foyer combinée à une poussée élevée conduit à un propulseur très encombrant et qui néanmoins présente un rapport de section plus faible qu'un moteur à turbopompes, c'est-à-dire une impulsion spécifique plus faible.

Au contraire, la solution proposée dans le cadre de la présente invention permet de concilier une faible pression du foyer et un faible encombrement grâce à la réalisation de tirs multiples aux apsides.

La faible pression du foyer diminue le flux thermique qui est environ huit fois plus faible que sur un moteur à turbopompes, ce qui permet d'appliquer un refroidissement régénératif simplifié ou encore un refroidissement par rayonnement.

Par ailleurs, l'utilisation du chauffage solaire, au moins pour la pressurisation des réservoirs, permet de supprimer la masse et les servitudes liées à la pressurisation à l'hélium.

Enfin, l'invention permet facilement de coordonner les séquences de tirs intermittents avec les phases de réchauffage des accumulateurs thermiques

## Revendications

1. Module de propulsion cryotechnique à faible poussée, présentant une poussée comprise entre 100 et 1000 N comprenant au moins un propulseur cryotechnique principal (10) dont la pression de combustion est comprise entre 2 et 10 bars, au moins deux propulseurs secondaires (21, 22) de contrôle d'attitude, au moins des premier et deuxième réservoirs (31, 32, 33, 34) d'alimentation en ergols cryogéniques, des moyens (110, 71, 72, 61, 62) de mise en pression intermittente desdits réservoirs d'alimentation (31, 32, 33, 34) et des moyens (110, 91, 92) pour déclencher des tirs du propulseur cryotechnique principal (10) de façon intermittente, pendant la mise en pression intermittente desdits réservoirs d'alimentation (31, 32, 33, 34), la durée entre deux tirs successifs étant comprise entre environ 1 heure 30 minutes et 12 heures, les moyens de mise en pression intermittente d'un réservoir d'alimentation (31, 32, 33, 34) comprenant au moins un circuit échangeur de chaleur (70 ; 170a) associé à un accumulateur thermique (60 ; 160 ; 260) et des moyens (71, 72) de mise en circulation d'une quantité prédéterminée d'un ergol dans ledit circuit échangeur de chaleur (70 ; 170a) et comprenant en outre des moyens(161, 162, 270) pour réchauffer l'accumulateur thermique (60 ; 160 ; 260) dans les périodes comprises entre deux tirs consécutifs.

2. Module de propulsion selon la revendication 1, **caractérisé en ce que** l'accumulateur thermique (60 ; 160) est chauffé au moins en partie à l'aide d'un capteur solaire (60a ; 160a).

3. Module de propulsion selon la revendication 2, **caractérisé en ce que** l'accumulateur thermique (60 ; 160) est réchauffé par un capteur solaire plan (60a ; 160a) dont le rapport absortivité/émissivité (α/ε) est supérieur à 1 et qui est muni d'une super isolation (60b ; 160b) sur sa face arrière.

4. Module de propulsion selon la revendication 2 ou la revendication 3, **caractérisé en ce que** le capteur solaire (60a ; 160a) est associé à un système de miroirs de concentration (161; 162) plans, ou paraboliques-cylindriques.

5. Module de propulsion selon l'une quelconque des revendications 1 à 4, **caractérisé en ce que** l'accumulateur thermique (260) est chauffé au moins en partie par récupération des pertes thermiques d'une pile à combustible (270) fonctionnant à l'aide des ergols évaporés.

6. Module de propulsion selon l'une quelconque des revendications 1 à 5, **caractérisé en ce que** l'accumulation thermique au sein de l'accumulateur thermique (60 ; 160 ; 260) est effectuée par un matériau à changement de phase tel qu'un métal alcalin sur un hydrocarbure.

7. Module de propulsion selon la revendication 5, **caractérisé en ce que** la pile à combustible (270) est alimentée par les vapeurs froides d'ergol issues d'un échangeur de chaleur (370) destiné à maintenir constante la température de puisage d'un réservoir d'ergol (31).

8. Module de propulsion selon l'une quelconque des revendications 1 à 7, **caractérisé en ce que** l'accumulateur thermique (60 ; 160 ; 260) est chauffé au moins en partie par chauffage électrique.

9. Module de propulsion selon l'une quelconque des revendications 1 à 8, **caractérisé en ce qu'**il comprend un propulseur cryotechnique principal unique (10) monté sur un cardan.

10. Module de propulsion selon l'une quelconque des revendications 1 à 8, **caractérisé en ce qu'**il comprend au moins trois propulseurs cryotechniques principaux dont la poussée individuelle est contrôlée par une perte de charge variable sur les circuits d'alimentation en ergols.

11. Module de propulsion selon l'une quelconque des revendications 1 à 8, **caractérisé en ce qu'**il comprend des premier et deuxième réservoirs d'ergol (31, 32) pour alimenter le propulseur principal (10) et **en ce que** les ergols sont intégralement vaporisés dans les accumulateurs thermiques (61, 62) associés aux réservoirs (31, 32) de manière à garantir un rapport de mélange constant.

12. Module de propulsion selon l'une quelconque des revendications 1 à 11, **caractérisé en ce qu'**un réservoir d'alimentation (31, 32) est muni d'une pompe de circulation (371) montée sur le corps d'un échangeur de chaleur associé (370) situé du côté puisage.

13. Module de propulsion selon l'une quelconque des revendications 1 à 12, **caractérisé en ce qu'**il comprend au moins des premier et deuxième réservoirs d'ergols principaux (31, 32) et au moins des premier et deuxième réservoirs d'ergols secondaires (33, 34) constituant des réservoirs tampons, lesquels réservoirs secondaires (33, 34) peuvent être mis en pression par lesdits moyens de mise en pression et sont dimensionnés de manière à permettre d'assurer une manoeuvre orbitale lorsqu'ils alimentent de façon intermittente le propulseur principal (10) et à être totalement vides à la fin d'un tir, des moyens étant prévus pour réalimenter lesdits réservoirs secondaires (33, 34) à partir des réservoirs principaux correspondants (31, 32), entre deux tirs successifs, et la pression des réservoirs principaux (31, 32) étant maintenue inférieure à la pression d'alimentation du propulseur principal (10).

14. Module de propulsion selon l'une quelconque des revendications 1 à 13, **caractérisé en ce qu'**au moins un réservoir secondaire (133) est recouvert d'une isolation thermique et est monté à l'intérieur d'un réservoir principal (131).

15. Module de propulsion selon l'une quelconque des revendications 1 à 14, **caractérisé en ce qu'**il comprend une alimentation électrique constituée par une pile à combustible (270) alimentée par l'évaporation des ergols cryogéniques.

16. Module de propulsion selon l'une quelconque des revendications 1 à 14, **caractérisé en ce qu'**il comprend une alimentation électrique constituée par au moins un panneau solaire (51) attaché à ce module.

17. Module de propulsion selon l'une quelconque des revendications 1 à 14, **caractérisé en ce qu'**il comprend une alimentation électrique constituée par une prise ombilicale reliée au satellite (200) mis en orbite avec ce module (100).

## Claims

1. A low-thrust cryogenic propulsion module presenting thrust lying in the range 100 N to 1000 N, the module comprising at least one main cryogenic thruster (10) whose combustion pressure lies in the range 2 bars to 10 bars, at least two attitude-controlling secondary thrusters (21, 22), at least first and second feed tanks (31, 32, 33, 34) for feeding cryogenic propellants, means (110, 71, 72, 61, 62) for intermittently pressurizing said feed tanks (31, 32, 33, 34), and means (110, 91, 92) for triggering intermittent firing of the main cryogenic thruster (10) during intermittent pressurization of said feed tanks (31, 32, 33, 34), the duration between two successive firings lying in the range about 1 h 30 min to 12 h, the means for intermittently pressurizing a feed tank (31, 32, 33, 34) comprising at least one heat exchange circuit (70; 170a) associated with a heat accumulator (60; 160; 260) and with means (71, 72) for circulating a predetermined quantity of a propellant through said heat exchanger (70; 170a), and further comprising means (161, 162, 270) for heating the heat accumulator (60; 160; 260) in the periods that lie between two consecutive firings.

2. A propulsion module according to claim 1, **characterised in that** the heat accumulator (60; 160) is heated at least in part by means of a solar collector (60a; 160a).

3. A propulsion module according to claim 2, **characterised in that** the heat accumulator (60; 160) is heated by a plane solar collector (60a; 160a) having an absorptance.emissivity ratio (α.ε) greater than 1 and provided with superinsulation (60b; 160b) on its rear face.

4. A propulsion module according to claim 2 or claim 3, **characterised in that** the solar collector (60a; 160a) is associated with a system of plane or parabolic-cylindrical concentration mirrors (161; 162).

5. A propulsion module according to any one of claims 1 to 4, **characterised in that** the heat accumulator (260) is heated at least in part by recovering heat losses from a fuel cell (270) operating on evaporated propellants.

6. A propulsion module according to any one of claims 1 to 5, **characterised in that** heat is accumulated within the heat accumulator (60; 160; 260) by means of a material that changes phase, such as an alkali metal on a hydrocarbon.

7. A propulsion module according to claim 5, **characterised in that** the fuel cell (270) is fed with cold propellant vapour from a heat exchanger (370) for keeping the drawing-off temperature in a propellant tank (31) constant.

8. A propulsion module according to any one of claims 1 to 7, **characterised in that** the heat accumulator (60; 160; 260) is heated at least in part by electrical heating.

9. A propulsion module according to any one of claims 1 to 8, **characterised in that** it has a single main cryogenic thruster (10) mounted on a gimbal mount.

10. A propulsion module according to any one of claims 1 to 8, **characterised in that** it has at least three main cryogenic thrusters each delivering individual thrust that can be controlled by varying head losses in the propellant feed circuits.

11. A propulsion module according to any one of claims 1 to 8, **characterised in that** it has first and second propellant tanks (31, 32) for feeding the main thruster (10), and **in that** the propellants are fully vaporized in the heat accumulators (61, 62) associated with the tanks (31, 32) so as to guarantee a constant mixture ratio.

12. A propulsion module according to any one of claims 1 to 11, **characterised in that** a feed tank (31, 32) is provided with a circulation pump (371) mounted on the body of an associated heat exchanger (370) situated at the drawing-off end.

13. A propulsion module according to any one of claims 1 to 12, **characterised in that** it has at least first and second main propellant tanks (31, 32) and at least first and second secondary propellant tanks (33, 34) constituting buffer tanks, which secondary tanks (33, 34) can be pressurized by said pressurizing means and are dimensioned in such a manner as to enable an orbital manoeuvre to be performed when they feed the main thruster (10) intermittently and so as to be completely emptied at the end of firing, means being provided for refilling said secondary tanks (33, 34) from the corresponding main tanks (31, 32) between two successive firings, and the pressure in the main tanks (31, 32) being maintained below the feed pressure for the main thruster (10).

14. A propulsion module according to any one of claims 1 to 13, **characterised in that** at least one secondary tank (133) is covered in thermal insulation and is mounted inside a main tank (131).

15. A propulsion module according to any one of claims 1 to 14, **characterised in that** it has an electrical power supply constituted by a fuel cell (270) fed by evaporation of cryogenic propellants.

16. A propulsion module according to any one of claims 1 to 14, **characterised in that** it has an electrical power supply constituted by at least one solar panel (51) attached to the module.

17. A propulsion module according to any one of claims 1 to 14, **characterised in that** it has an electrical power supply constituted by an urnbilical connection connected to the satellite (200) that is put into orbit using the module (100).

## Patentansprüche

1. Kryotechnisches Antriebsmodul mit geringem Schub, das einen Schub zwischen 100 und 1000 N aufweist, umfassend mindestens ein kryotechnisches Haupttriebwerk (10), dessen Verbrennungsdruck zwischen 2 und 10 bar beträgt, mindestens zwei Nebentriebwerke (21, 22) zur Haltungskontrolle, mindestens erste und zweite Behälter (31, 32, 33, 34) zur Versorgung mit kryogenem Ergol, Mittel (110, 71, 72, 61, 62) zur intermittierenden Unterdrucksetzung der Versorgungsbehälter (31, 32, 33, 34) und Mittel (110, 91, 92), um Zündungen des kryotechnischen Haupttriebwerks (10) auf intermittierende Weise während der intermittierenden Unterdrucksetzung der Versorgungsbehälter (31, 32, 33, 34) auszulösen, wobei die Dauer zwischen zwei aufeinander folgenden Zündungen zwischen ungefähr 1 Stunde 30 Minuten und 12 Stunden beträgt, wobei die Mittel zur intermittierenden Unterdrucksetzung eines Versorgungsbehälters (31, 32, 33, 34) mindestens eine Wärmeaustauschschaltung (70; 170a), die mit einem Wärmespeicher (60; 160; 260) verbunden ist, und Mittel (71, 72) umfassen, um eine vorbestimmte Menge eines Ergols in der Wärmeaustauschschaltung (70; 170a) in Umlauf zu bringen, und ferner Mittel (161, 162, 270) umfassen, um den Wärmespeicher (60; 160; 260) in den Zeiten zwischen zwei aufeinander folgenden Zündungen wieder zu erhitzen.

2. Antriebsmodul nach Anspruch 1, **dadurch gekennzeichnet, daß** der Wärmespeicher (60; 160) mindestens teilweise mit Hilfe eines Sonnensensors (60a; 160a) erhitzt wird.

3. Antriebsmodul nach Anspruch 2, **dadurch gekennzeichnet, daß** der Wärmespeicher (60; 160) durch einen flachen Sonnensensor (60a; 160a) wieder erhitzt wird, dessen Verhältnis von Absorptionsvermögen/Emissionsvermögen (α/ε) größer als 1 ist und der mit einer Superisolierung (60b; 160b) auf seiner Rückseite versehen ist.

4. Antriebsmodul nach Anspruch 2 oder Anspruch 3, **dadurch gekennzeichnet, daß** der Sonnensensor (60a; 160a) mit einem System von flachen oder parabolischzylindrischen Konzentrationsspiegeln (161; 162) verbunden ist.

5. Antriebsmodul nach einem der Ansprüche 1 bis 4, **dadurch gekennzeichnet, daß** der Wärmespeicher (260) mindestens teilweise durch Wiedergewinnung der Wärmeverluste einer Brennstoff-Zelle (270), die mit Hilfe der verdampften Ergole funktioniert, erhitzt wird.

6. Antriebsmodul nach einem der Ansprüche 1 bis 5, **dadurch gekennzeichnet, daß** die Wärmespeicherung im Wärmespeicher (60; 160; 260) durch ein Material mit Phasenänderung, wie beispielsweise ein alkalisches Metall auf einem Kohlenwasserstoff erfolgt.

7. Antriebsmodul nach Anspruch 5, **dadurch gekennzeichnet, daß** die Brennstoff-Zelle (270) mit den kalten Ergoldämpfen versorgt wird, die von einem Wärmetauscher (370) kommen, der dazu bestimmt ist, die Zapftemperatur eines Ergolbehälters (31) konstant zu halten.

8. Antriebsmodul nach einem der Ansprüche 1 bis 7, **dadurch gekennzeichnet, daß** der Wärmespeicher (60; 160; 260) mindestens teilweise durch elektrische Heizung erhitzt wird.

9. Antriebsmodul nach einem der Ansprüche 1 bis 8, **dadurch gekennzeichnet, daß** es ein einziges kryotechnisches Haupttriebwerk (10) umfaßt, das auf einem Kardanantrieb befestigt ist.

10. Antriebsmodul nach einem der Ansprüche 1 bis 8, **dadurch gekennzeichnet, daß** es mindestens drei kryotechnische Haupttriebwerke umfaßt, deren Einzelschub durch einen variablen Lastverlust an den Ergolversorgungsschaltungen kontrolliert wird.

11. Antriebsmodul nach einem der Ansprüche 1 bis 8, **dadurch gekennzeichnet, daß** es erste und zweite Ergolbehälter (31, 32) umfaßt, um das Haupttriebwerk (10) zu versorgen, und daß die Ergole zur Gänze in den Wärmespeichern (61, 62), die mit den Behältern (31, 32) verbunden sind, verdampft werden, um ein konstantes Mischungsverhältnis zu gewährleisten.

12. Antriebsmodul nach einem der Ansprüche 1 bis 11, **dadurch gekennzeichnet, daß** ein Versorgungsbehälter (31, 32) mit einer Umlaufpumpe (371) versehen ist, die auf dem Körper eines zugehörigen Wärmetauschers (370), der sich auf der Zapfseite befindet, befestigt ist.

13. Antriebsmodul nach einem der Ansprüche 1 bis 12, **dadurch gekennzeichnet, daß** es mindestens erste und zweite Hauptergolbehälter (31, 32) und mindestens erste und zweite Nebenergolbehälter (33, 34) umfaßt, die Pufferbehälter darstellen, wobei die Nebenbehälter (33, 34) durch die Mittel zur Unterdrucksetzung unter Druck gesetzt werden können und derart dimensioniert sind, daß sie es ermöglichen, ein Orbitalmanöver sicher zu stellen, wenn sie das Haupttriebwerk (10) auf intermittierende Weise versorgen, und am Ende einer Zündung vollkommen leer zu sein, wobei Mittel vorgesehen sind, um die Nebenbehälter (33, 34) aus den entsprechenden Hauptbehältern (31, 32) zwischen zwei aufeinander folgenden Zündungen neu zu versorgen, und wobei der Druck der Hauptbehälter (31, 32) geringer als der Versorgungsdruck des Haupttriebwerks (10) gehalten wird.

14. Antriebsmodul nach einem der Ansprüche 1 bis 13, **dadurch gekennzeichnet, daß** mindestens ein Nebenbehälter (133) mit einer Wärmeisolierung verkleidet und im Inneren eines Hauptbehälters (131) befestigt ist.

15. Antriebsmodul nach einem der Ansprüche 1 bis 14, **dadurch gekennzeichnet, daß** es eine elektrische Versorgung umfaßt, die von einer Brennstoff-Zelle (270) gebildet ist, die mit den verdampften kryogenen Ergolen gespeist wird.

16. Antriebsmodul nach einem der Ansprüche 1 bis 14, **dadurch gekennzeichnet, daß** es eine elektrische Versorgung umfaßt, die von mindestens einer mit diesem Modul verbundenen Solarplatte (51) gebildet ist.

17. Antriebsmodul nach einem der Ansprüche 1 bis 14, **dadurch gekennzeichnet, daß** es eine elektrische Versorgung umfaßt, die von einem Speisekabel gebildet ist, das mit dem Satelliten (200) verbunden ist, der mit diesem Modul (100) in die Umlaufbahn gebracht wurde.
